# EUROPÄISCHE PATENTSCHRIFT

(11) **EP 3 613 205 B1**
(45) Veröffentlichungstag und Bekanntmachung des Hinweises auf die Patenterteilung: **14.08.2024**
(21) Anmeldenummer: 19708506.1
(22) Anmeldetag: 28.02.2019
(51) Int. Cl.: H04M 1/18, H04M 1/725, H04M 1/72454

(54) **GEFEDERTE STURZSICHERUNG FÜR EIN MOBILES ENDGERÄT**
SPRING-LOADED FALL PROTECTION FOR A MOBILE TERMINAL DEVICE
ANTICHUTE À RESSORT POUR UN TERMINAL MOBILE

(30) Priorität: 07.03.2018 DE 102018105199
(43) Veröffentlichungstag der Anmeldung: 26.02.2020
(73) Patentinhaber: Frenzel + Mayer Solutions GBR, 73430 Aalen (DE)
(72) Erfinder: FRENZEL, Philip, 89564 Auernheim (DE); MAYER, Peter, 73463 Westhausen (DE)
(74) Vertreter: Raunecker, Klaus Peter
(86) Internationale Anmeldenummer: PCT/EP2019/055080
(87) Internationale Veröffentlichungsnummer: WO 2019/170525

(56) Entgegenhaltungen:
- US-A1- 2015 331 456
- US-A1- 2017 155 416
- US-B1- 7 059 182

## Beschreibung

Die Erfindung betrifft eine Umhausung für ein elektronisches Gerät, insbesondere eine Schutzhülle für ein Mobiltelefon.

Schutzvorrichtungen für Mobiltelefone sind aus dem Stand der Technik bereits bekannt. Aufgabe derartiger Schutzvorrichtungen ist es, Mobiltelefone vor Umwelteinflüssen wie zum Beispiel Staub und Feuchtigkeit zu schützen und im Besonderen die Mobiltelefone im Fall eines Sturzes vor Beschädigungen zu schützen. Ohne eine solche Schutzvorrichtung wird, wenn das Mobiltelefon auf den Boden fällt häufig der Bildschirm beschädigt, aber auch andere im Mobiltelefon verbaute Teile wie Prozessoren, Speicher und Kameras können durch den Aufprall auf den Boden beschädigt werden.

Die US 9,715,257 B2 zeigt einen in einem Mobiltelefon integrierten Displayschutz. Durch die Verwendung von Sensoren und Mikroprozessoren wird ein Fallvorgang des Mobiltelefons detektiert und ein Schutzmechanismus aktiviert. Der Schutzmechanismus umfasst gebogene, elastische Dämpfungselemente, die über eine in das Mobiltelefon integrierte Mechanik im Fall eines detektierten Fallvorgangs ausgefahren werden können und sich so vor das Display schieben, dass dieses vor einer Beschädigung durch einen Aufprall auf dem Boden geschützt ist. Der Nachteil der Lösung ist, dass die Mechanik und die bereits gebogenen Dämpfungselemente einen großen Bauraumbedarf haben und nur das Display vor Beschädigungen schützen.

Aus US 2015/0331456 A1 ist ein Gehäuse für eine Mobiltelefon bekannt, das randseitig mit ausfahrbaren Stoßdämpfern versehen ist. Wird durch einen im Gehäuse integrierten Beschleunigungssensor ein Fallvorgang detektiert, so werden mit Hilfe einer Auslöseeinheit die Stoßdämpfer aktiviert.

Die US 7,059,182 B1 zeigt eine Schutzhülle für ein Mobiltelefon, die durch integrierte Sensoren und einen Mikroprozessor einen Fallvorgang des Mobiltelefons detektieren kann. Der Mikrocontroller aktiviert eine Auslöseeinheit, die einen Aufprallschutz auslöst, der sich dadurch von einer eingefahrenen Position in eine ausgefahrene Position bewegt. Der Aufprallschutz umfasst mehrere Federn, die so an der Schutzhülle angebracht sind, dass sie jede Ecke, die Vorderseite und die Rückseite des Mobiltelefons schützen. Der Nachteil der Lösung ist, dass die Federn selbst nicht gedämpft sind. Das Mobiltelefon wird durch die Federn vor einem direkten Aufprall auf dem Boden durch die Federn geschützt, die aufgenommene Energie wird aber durch die Federn wieder an das Mobiltelefon zurückgegeben, welches dadurch wieder abhebt und mehrfach auf den Boden prallt, was die Belastung auf das Mobiltelefon erhöht.

Aufgabe der vorliegenden Erfindung ist es, einen Aufprallschutz für Mobiltelefone weiterzubilden, welcher die Belastungen auf das Mobiltelefon reduziert. Weiterhin soll der Aufprallschutz eine Auslöseeinheit aufweisen, die bei Detektion eines Fallvorgangs ein zuverlässiges und schnelles Auslösen der Schutzvorrichtung sicherstellt.

Diese Aufgabe wird gelöst durch eine Vorrichtung mit den Merkmalen des unabhängigen Anspruchs 1. Die Unteransprüche betreffen vorteilhafte Weiterbildungen und Varianten der Erfindung.

Die Erfindung schließt eine Umhausung für ein elektronisches Gerät ein, welche mindestens eine Dämpfungseinheit mit einem Dämpfungselement, die zwischen einer eingefahrenen Position und einer ausgefahrenen Position bewegt werden kann, umfasst. Die Dämpfungseinheit hat also einen eingefahrenen Zustand, in dem die Dämpfungseinheit in der Schutzhülle fixiert ist und einen ausgefahrenen Zustand, in dem die Dämpfungseinheit ausgefahren ist und das Mobiltelefon vor Beschädigungen durch einen Aufprall auf den Boden schützen soll. Das Dämpfungselement wiederum umfasst eine Feder und einen Dämpfer. Die Umhausung umfasst weiterhin mindestens einen Sensor, der dazu ausgebildet ist, einen Fallvorgang des elektronischen Gerätes zu detektieren und eine Auslöseeinheit, die dazu eingerichtet ist, bei einer Detektion eines Fallvorganges einen Positionswechsel der mindestens einen Dämpfungseinheit von der eingefahrenen Position in die ausgefahrene Position auszulösen. Ein Fallvorgang ist ein Vorgang, bei dem das Mobiltelefon sich so bewegt, dass man davon ausgehen muss, dass es sich nicht mehr unter Kontrolle des Besitzers befindet und in Kürze auf dem Boden auftrifft. Die Feder und der Dämpfer sind dazu eingerichtet, bei der Bewegung von der eingefahrenen Position in die ausgefahrene Position ihre Form zu ändern.

Die Dämpfungselemente können aus der eingefahrenen in die ausgefahrene Position durch eine vorgespannte Drehfeder bzw. Torsionsfeder oder Spiralfeder, die mit ihrem ersten Ende in dem Einspannabschnitt und mit dem zweiten Ende in der Schutzhülle befestigt ist, bewegt werden, nachdem die Auslöseeinheit die Verriegelung gelöst hat.

Die Auslöseeinheit umfasst einen Aktor, welcher einen Draht aus einer Formgedächtnislegierung enthält. Dieser Draht ist an zwei Aktorlagerungen befestigt und besitzt einen Knick, der Einfluss auf die Auslenkung und auf die Kraft des Aktors hat, wobei der Knickwinkel je nach Ausführungsform zwischen 0° und 180° gewählt werden kann. Formgedächtnislegierungen oder Memorymetalle, die auch als shape memory alloy (SMA) bekannt sind, sind spezielle Metalle, die in zwei unterschiedlichen Kristallstrukturen existieren können. Der Begriff Formgedächtnis steht für die ungewöhnliche Eigenschaft der Gestalterinnerung. Nach einer starken Deformation ist die Formgedächtnislegierung in der Lage, sich in eine zuvor eingeprägte Gestalt zurück zu verformen. Die meisten Metalle haben bis zu ihrem Schmelzpunkt immer dieselbe Kristallstruktur, im Gegensatz zu einer SMA-Legierung. Diese Legierung ändert ihre Struktur in Abhängigkeit der Temperatur. Es gibt eine Hochtemperaturphase (Austenit) und eine Niedertemperaturphase (Martensit). Diese beiden Phasen können durch Temperaturänderung ineinander übergehen. Innerhalb bestimmter Belastungsgrenzen erfolgt die damit verbundene Gestaltänderung vollkommen reversibel. Dieser Effekt ist besonders ausgeprägt bei metallischen Legierungen wie z.B. NickelTitan (NiTi, Nitinol).

Im dargestellten Ausführungsbeispiel wird der sogenannte Einwegeffekt genutzt. Dieser beruht auf der pseudoplastischen Verformung im martensitischen Zustand. Durch das Anlegen einer mechanischen Spannung lässt sich das Kristallgitter im martensitischen Zustand leicht umorientieren und es entsteht eine Formänderung, welche im kalten Zustand bleibend ist. Wird die Temperatur jedoch erhöht, so stellt sich während der Temperaturerhöhung die ursprüngliche Kristallorientierung des Austenits wieder ein. Somit wird die ursprüngliche Form des Formgedächtniselementes wiederhergestellt. Wird das Material erneut abgekühlt, erfolgt keine weitere thermisch induzierte Formänderung; das Material kann jedoch mechanisch wieder umgeformt werden.

Der mindestens eine Sensor ist zum Bespiel ein Beschleunigungssensor, der die Aufgabe hat, die Beschleunigung des Mobiltelefons ständig zu überwachen und die gemessenen Werte an einen Mikrocontroller zu senden. Der Mikrocontroller bewertet die Messwerte des Beschleunigungssensors und veranlasst nach Überschreiten eines vorher festgelegten Grenzwertes die Auslöseeinheit, eine Verriegelung oder eine andere Vorrichtung, die zur Fixierung der Dämpfungseinheit in der eingefahrenen Position geeignet ist, zu lösen, wodurch sich die Dämpfungseinheit von der eingefahrenen in die ausgefahrene Position bewegt.

Vorteilhafterweise umfasst jede Dämpfungseinheit jeweils zwei Dämpfungselemente. Die Dämpfungselemente können an einem gemeinsamen Einspannabschnitt befestigt sein, die auch Teil der Dämpfungseinheit sein kann und zur Fixierung der Dämpfungseinheiten in der Schutzhülle dienen kann. Durch eine Verriegelung in Form einer Nase oder eines Hakens, die in eine in dem Einspannabschnitt angeordnete Aussparung eingreift, kann die Dämpfungseinheit in der eingefahrenen Position fixiert werden. Eine Auslöseeinheit, die so ausgestaltet sein kann, dass sie die Nase oder den Haken aus der Aussparung in dem Einspannabschnitt ziehen kann, kann durch den Mikrocontroller angesteuert werden, sobald dieser einen Fallvorgang detektiert hat, der über einem vorher festgelegten Grenzwert liegt. Eine Drehfeder, die unter Vorspannung in dem Einspannabschnitt befestigt sein kann, bewegt das Dämpfungselement von der eingefahrenen in die ausgefahrene Position. Die Dämpfungselemente umfassen vorteilhafterweise je eine Feder und einen Dämpfer in zwei sich mindestens teilweise überlappenden Lagen.

In einer vorteilhaften Ausgestaltung der Erfindung ist die mindestens eine Feder mit dem mindestens einen Dämpfer formschlüssig verbunden. Formschlüssig beschreibt eine Verbindung, bei der Bauteile allein auf Grund ihrer Geometrie miteinander verbunden sind und nicht auf eine kraftübertragende Verbindung wie zum Beispiel durch einen Kleber angewiesen sind. Dies führt in einer besonders vorteilhaften Ausführungsform der Erfindung dazu, dass sich die mindestens eine Feder und der mindestens eine Dämpfer unter Reibung relativ zu einander bewegen können. Die Bewegung der Feder und des Dämpfers führt zu Reibung, die zusätzlich zu der Dämpfungswirkung des Dämpfers die durch den Sturz erzeugte kinetische Energie, die von der mindestens einen Dämpfungseinheit aufgenommen wird, durch Umwandlung in Reibungswärme aus dem Dämpfungselement entzieht und dadurch die Wahrscheinlichkeit eines erneuten Abhebens des Mobiltelefons weiter reduziert. Ein weiterer Vorteil ist, dass die Feder und der Dämpfer weitgehend die gleiche Bewegung von der eingefahrenen in die ausgefahrenen Position ausführen, wobei die Feder mit der in ihr gespeicherten Energie den Dämpfer mitbewegt und in die annähernd gleiche Form wie die Feder bringen kann.

Grundsätzlich sind auch andere Verbindungsarten zwischen Feder und Dämpfer möglich, insbesondere eine Kombination aus Formschluss und Klebung oder auch eine reine Klebung.

In einer Ausführungsform der Erfindung ist die mindestens eine Feder als Blattfeder ausgebildet. Mobiltelefone werden von Generation zu Generation immer flacher und die Schutzhüllen haben neben den weiter oben beschriebenen funktionellen Anforderungen auch ästhetische Anforderungen zu erfüllen und sollten deswegen die äußere Gestaltung und Formgebung des Mobiltelefons so wenig wie möglich stören oder verändern. Dies bedeutet, dass eine Schutzhülle für ein flaches Mobiltelefon auch eine sehr geringe Aufbauhöhe haben sollte. Um das Dämpfungselement in der eingefahrenen Position so flach wie möglich zu gestalten, ist die Verwendung einer Blattfeder als Feder im Dämpfungselement von Vorteil.

In einer weiteren vorteilhaften Ausgestaltung der Erfindung ist der mindestens eine Dämpfer aus einem Kunststoff, insbesondere einem thermoplastisches Polyurethan, gefertigt. Der Dämpfer in der erfindungsgemäßen Ausgestaltung muss flexibel sein, eine hohe Dämpfung aufweisen und wiederverwendbar sein. Dies ist im Speziellen durch ein thermoplastisches Polyurethan gegeben, wobei diese Klasse der thermoplastischen Kunststoffe noch bezüglich Ihrer Härte eingestellt werden kann und so auf verschiedene Anforderungen, die sich durch unterschiedliche Modelle von Mobiltelefonen ergeben können, angepasst werden kann. Thermoplastisches Polyurethan wird im Folgenden auch als TPU bezeichnet. Der Dämpfer kann so gestaltet sein, dass er nahezu die Form der im entspannten Zustand aufgebogenen Feder besitzt. Der formschlüssig mit der Feder verbundene Dämpfer kann als Dämpfungselement beim Bewegen von der ausgefahrenen Position in die eingefahrene Position durch eine in der Schutzhülle vorgesehene Aussparung in eine flache Position gedrückt werden. In einer weiteren vorteilhaften Ausgestaltung des mindestens einen Dämpfers weist dieser mindestens eine Einkerbung senkrecht zu seiner Längsachse auf. Die Längsachse des Dämpfers und des Dämpfungselementes ist die Achse senkrecht zur Biegerichtung der Feder und des Dämpfungselementes. Die Einkerbung verhindert ein Fließen des Kunststoffes, welches durch eine lange Verweildauer in der eingefahrenen Position auftreten kann, was zu Folge hätte, dass das Dämpfungselement, wenn es wieder in die ausgefahrenen Position bewegt wird nicht mehr vollständig in die ursprüngliche Form gebracht werden kann. Die Einkerbungen wirken dabei wie Gelenke und erleichtern das Verformen des Dämpfers von der eingefahrenen in die ausgefahrene Position der Dämpfungselemente und umgekehrt, ohne die Dämpfungswirkung des Dämpfers entscheidend zu verringern.

Im Falle eines Fallvorgangs des Mobiltelefons werden die Dämpfungselemente, die sich in der ausgefahrenen Position befinden, durch das Auftreffen auf dem Boden deformiert. Die Dämpfung der durch den Fallvorgang freigesetzten kinetischen Energie wird durch Dissipation der Energie, die zur Umformung des Volumens des Dämpfers benötigt wird, in Wärme erreicht.

Die Dämpfungselemente sind vorteilhafterweise so ausgelegt, dass sie mindestens eine Energie von 1,5 Joule aufnehmen können, was ausreichend ist, einen Sturz des Mobiltelefons ohne Einfluss der Ausrichtung im Raum so stark abzudämpfen, dass es zu keinen Beschädigungen am Mobiltelefon kommt. Ein Teil der Energie wird durch den Dämpfer in Wärme umgewandelt, ein anderer Teil bleibt zunächst als Verformungsenergie in der Feder und wird wieder an das Mobiltelefon abgegeben.

In einer weiteren vorteilhaften Ausgestaltung verjüngt sich mindestens eines der Dämpfungselemente zu seinem freien Ende hin und/oder die Längsachsen des Dämpfungselementes und der Schutzhülle sind in der eingefahrenen Position um einen Winkel größer 0° gegeneinander verdreht. Wie oben schon beschrieben ist die Anforderung an den Bauraum für die Schutzhülle sehr hoch, wobei gleichzeitig die Anforderungen an die Dämpfungswirkung der Dämpfungseinheiten durch die Masse des Mobiltelefons und die Fallhöhe, aus der das Mobiltelefon noch ohne Beschädigung desselben fallen darf, festgelegt wird. Die aufgenommene Energie der Dämpfungselemente hängt insbesondere von der Dicke der Federn und Dämpfer, deren Breite und deren Steifigkeiten sowie von der Länge ab. Die Feder kann dabei insbesondere so ausgelegt sein, dass sie immer im elastischen Bereich deformiert wird. Für die Spannungen in der Feder ist die Breite der Dämpfungseinheiten entscheidend, wobei die Spannungen im Material der Feder und des Dämpfers zum Einspannabschnitt hin ansteigen und sich zum freien Ende hin reduzieren. Dadurch ist es möglich, die Dämpfungselemente zum freien Ende hin in der Breite zu reduzieren, ohne dabei in den plastischen Bereich der Feder zu kommen und ohne nicht mehr tolerierbare Verluste bei der Energieaufnahme der Dämpfungselemente hinnehmen zu müssen. Durch die sich verjüngenden Dämpfungselemente ergibt sich die Möglichkeit, Dämpfungselemente zu verwenden, die länger als die halbe Länge des Mobiltelefons sind, ohne zusätzlichen Bauraum zu benötigen, da sich die Dämpfungselemente durch die verjüngten Enden überlappen können. In der eingefahrenen Position schließen die Dämpfungselemente mit mindestens einer Kante bündig mit der Schutzhülle ab, um den gegebenen Bauraum optimal zu nutzen. Um zwei Dämpfungselemente, die auf einer Längsseite der Schutzhülle positioniert sind, mit minimalem Bauraumbedarf anzuordnen, ist es notwendig, die Längsachse des Dämpfungselementes, also die Achse die senkrecht zur Biegerichtung der Feder liegt, gegenüber der Längsachse des Mobiltelefons, die der Längsachse des Displays entspricht, zu verdrehen. Durch das Verdrehen liegt die eine Seite der verjüngten Form parallel zur Außenkante der Schutzhülle. Das zweite Dämpfungselement ist so angeordnet, dass die Seite, die gegenüber der Längsachse des Mobiltelefons verdreht ist, parallel zu der zur Längsachse des Mobiltelefons verdrehten Seite des ersten Dämpfungselementes liegt und die zweite Seite parallel zur Längsachse des Mobiltelefons ausgerichtet ist.

In einer besonders vorteilhaften Ausgestaltung der Gestaltung umfasst die Umhausung vier Dämpfungseinheiten. Die Dämpfungseinheiten werden soweit ausgefahren, bis sie in jeder Ecke des Mobiltelefons in der Winkelhalbierenden des Winkels zwischen den eine Ecke einschließenden Seiten positioniert sind, wobei sich je eines der Dämpfungselemente in Richtung des Displays, im Folgenden als Vorderseite des Mobiltelefons bezeichnet und in Richtung der dem Display abgewandten Seite des Mobiltelefons, im Folgenden als Rückseite des Mobiltelefons bezeichnet, aufbiegen, sodass das Mobiltelefon unabhängig von der Lage des Mobiltelefons im Raum vor Beschädigungen durch einen Aufprall geschützt ist. Diese Position entspricht der ausgefahrenen Position der Dämpfungseinheiten. Die vier Dämpfungseinheiten können je nach Ausgestaltung der Verriegelungen und deren Anbindung an den Aktor mit je einem Aktor, mit zwei Aktoren oder auch nur mit einem Aktor für alle vier Dämpfungseinheiten entriegelt werden.

In einer weiteren vorteilhaften Ausführungsform ist das mindestens eine Dämpfungselement in der ausgefahrenen Position spiralförmig gebogen. In einer besonders vorteilhaften Ausgestaltung der Erfindung liegt der Öffnungswinkel des spiralförmig gebogenen Dämpfungselementes zwischen 120° - 180°, insbesondere bei 150°. Neben der spiralförmigen Biegung sind auch andere Biegeformen, beispielsweise kreisförmig, dreieckig oder auch oval möglich.

Versuche haben gezeigt, dass die für einen effektiven Schutz notwendige Energieaufnahme der Dämpfungselemente von mindestens 1,5 Joule durch ein spiralförmig aufgerolltes Dämpfungselement mit einem Öffnungswinkel von 150° am besten erreicht wurde. Der Öffnungswinkel des Dämpfungselementes ist dabei der Winkel, den die Tangente an dem freien Ende des Dämpfungselementes von der eingefahrenen Position in die ausgefahrene Position überstreicht.

Nachfolgend werden Ausführungsbeispiele und Varianten der Erfindung anhand der Zeichnung näher erläutert. Es zeigen
- Figur 1: eine erste Ausführungsform der Erfindung in einer Draufsicht,
- Figur 2a: eine Detailansicht einer Ausführungsform zu der Erfindung als Draufsicht in eingefahrenem Zustand,
- Figur 2b: eine Detailansicht einer Ausführungsform zu der Erfindung als Draufsicht in ausgefahrenem Zustand,
- Figur 2c: eine Detailansicht einer Ausführungsform zu der Erfindung als Seitenansicht in ausgefahrenem Zustand,
- Figur 3a: eine Seitenansicht einer Ausführungsform zu der Erfindung,
- Figur 3b: eine perspektivische Detailansicht einer Ausführungsform zu der Erfindung,
- Figur 3c: eine Seitenansicht einer weiteren Ausführungsform zu der Erfindung,
- Figur 3d: eine perspektivische Detailansicht einer weiteren Ausführungsform zu der Erfindung,
- Figur 3e: eine Seitenansicht eines Details zu der Erfindung,
- Figur 4a: eine zweite Ausführungsform der Erfindung in einer Draufsicht,
- Figur 4b: eine Detailansicht einer Ausführungsform zu der Erfindung als Draufsicht in eingefahrenem Zustand,
- Figur 4c: eine Detailansicht einer weiteren Ausführungsform zu der Erfindung als Draufsicht in eingefahrenem Zustand,
- Figur 4d: eine Detailansicht einer weiteren Ausführungsform zu der Erfindung als Draufsicht in eingefahrenem Zustand,
- Figur 4e: eine Detailansicht einer weiteren Ausführungsform zu der Erfindung als Draufsicht in eingefahrenem Zustand, und
- Figur 5: eine Ausführungsform der Erfindung mit weiter verbesserten Dämpfungseigenschaften.

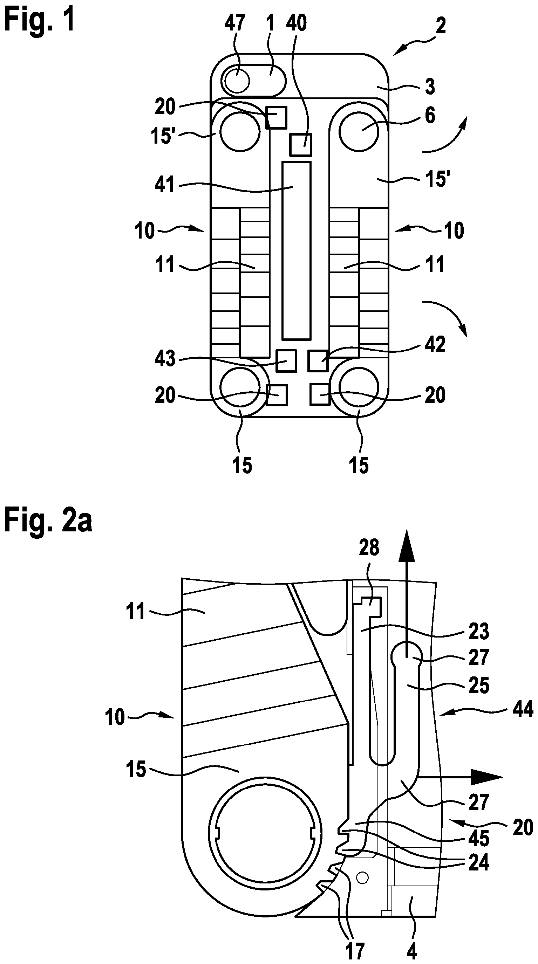

Figur 1 zeigt in einer ersten Ausführungsform der Erfindung eine Umhausung für ein elektronisches Gerät. In der gezeigten Ausführungsform ist die Umhausung als eine Schutzhülle 2 für ein Mobiltelefon 1 mit einer Kamera 47 ausgebildet, wobei die Schutzhülle 2 ein Grundgestell 3 und eine Abdeckung umfasst, welche in der Figur 1 aus Gründen der Übersichtlichkeit nicht gesondert dargestellt ist. Die Abdeckung fixiert die auf dem Grundgestell 3 angeordneten Bauteile der Schutzhülle 2 und/oder schützt diese vor äußeren Einflüssen, wie zum Beispiel Staub und Feuchtigkeit. Ebenso können die Bauteile auch zuerst auf der Abdeckung montiert und fixiert werden und die Abdeckung nach erfolgter Montage der Bauteile auf dem Grundgestell 3 befestigt werden. Weiterhin umfasst die Schutzhülle 2 für ein Mobiltelefon 1 Dämpfungseinheiten 10, welche jeweils ein Dämpfungselement 11 und einen Einspannabschnitt 15 umfassen, Auslöseeinheiten 20, einen Beschleunigungssensor 42, einen Berührungssensor 41, einen Energiespeicher 43 und einen Mikrocontroller 40. Im Grundgestell 3 und/oder in der Abdeckung sind Aufnahmen für diese Bauteile vorgesehen, um diese im montierten Zustand auf und/oder zwischen dem Grundgestell 3 und der Abdeckung zu fixieren. Die Schutzhülle 2 kann aus jedem beliebigen Material wie beispielsweise PA6, PA66, PA12, PC, PET, PBT, TPU, TPE hergestellt werden. Der Beschleunigungssensor 42 hat die Aufgabe, ununterbrochen die Beschleunigung des Mobiltelefons 1 zu messen und die Messwerte kontinuierlich an den Mikrocontroller 40 zu senden. Der Berührungssensor 41 hat die Aufgabe, zu ermitteln, ob sich das Mobiltelefon 1 beispielsweise in der Hand oder in einer Tasche, wie zum Beispiel einer Hosentasche oder Handtasche, befindet und sendet diese Informationen ebenfalls an den Mikrocontroller 40, insbesondere dann, wenn ein freier Fall festgestellt wurde. Der Mikrocontroller 40 berechnet auf Grund der empfangenen Daten und vorher festgelegten Grenzwerten, ob sich das Mobiltelefon 1 in einem Fallvorgang befindet oder nicht. Im Falle eines detektierten Fallvorgangs wird durch den Mikrocontroller 40 ein Signal an die Auslöseeinheiten 20 gesendet, die daraufhin die Dämpfungseinheiten 10 auslösen, um den bevorstehenden Aufprall des Mobiltelefons 1 auf einer Fläche, wie zum Beispiel dem Fußboden, abzudämpfen und so eine Beschädigung des Mobiltelefons 1 zu verhindern. In der gezeigten Ausführungsform der Erfindung sind vier Dämpfungseinheiten 10 in der Nähe der vier Ecken des Mobiltelefons 1 angeordnet, die im ausgefahrenen Zustand über die Ebene des Displays, im Folgenden als Vorderseite des Mobiltelefons 1 bezeichnet, und die Ebene, die dem Display gegenüber liegt, im Folgenden als Rückseite des Mobiltelefons 1 bezeichnet und in Verlängerung der Winkelhalbierenden des Winkels zwischen den eine Ecke einschließenden Seitenrändern des Mobiltelefons 1, über die Ecken des Mobiltelefons 1 vorstehen und in dieser Position einen Aufprall unabhängig von der Orientierung des Mobiltelefons 1 beim Aufprall dämpfen können.

Diese Position des Dämpfungselementes 11 im ausgefahrenen Zustand ist auf Grund von Bauraumanforderungen nicht immer mit identischen Dämpfungseinheiten 10 für alle vier Ecken umzusetzen. Die Dämpfungseinheiten 10 auf der oberen Hälfte der dargestellten Schutzhülle 2 besitzen einen verlängerten Einspannabschnitt 15', um so die Kamera 47 des Mobiltelefons 1, welche in der oberen linken Ecke positioniert ist, in der eingefahrenen Position nicht mit dem Einspannabschnitt 15' oder einem anderen Bauteil zu überdecken.

Die Dämpfungseinheiten 10 sind in der Schutzhülle 2 beweglich gelagert und besitzen eine eingefahrene Position und eine ausgefahrene Position, wobei die Dämpfungseinheiten 10 in der eingefahrenen Position verriegelt werden können. Der Einspannabschnitt 15 ist auf einer Aufnahme 6 gelagert und bildet mit dieser ein Drehlager für die Dämpfungseinheit 10. Im eingefahrenen Zustand liegen die Dämpfungseinheiten 10 zwischen der dem Mobiltelefon 1 abgewandten Seite der Schutzhülle 2 und der Abdeckung in einer durch die Schutzhülle 2 und Abdeckung gebildeten Aussparung und werden durch die Abdeckung auf der einen Seite und das Grundgestell auf der anderen Seite zusammengedrückt und so zwangsweise in ihrer zusammengedrückten, flachen Form gehalten.

Figur 2a zeigt eine Detailansicht einer exemplarischen Dämpfungseinheit 10 und Teile der Auslöseeinheit, wobei die Bauteile in dieser Ausführungsform der Schutzhülle 2 in die Abdeckung 4 montiert sind und das Grundgestell zur besseren Übersichtlichkeit nicht dargestellt ist. Die Dämpfungseinheit 10 umfasst ein Dämpfungselement 11 mit einem in der Figur nicht dargestellten Dämpfer und einer in der Figur ebenfalls nicht dargestellten Feder und einen Einspannabschnitt 15, mit der die Dämpfungseinheit 10 zwischen dem Grundgestell der Schutzhülle 2 und der Abdeckung 4 fixiert werden kann. Der Einspannabschnitt 15 ist an einer Seite abgerundet, wobei sich das Dämpfungselement 11 an der der abgerundeten Seite gegenüberliegenden Seite an den Einspannabschnitt 15 anschließt. Dabei kann das Dämpfungselement 11 über die gesamte oder nur über einen Teil der Breite mit dem Einspannabschnitt 15 verbunden sein. Der Einspannabschnitt 15 hat eine kreisförmige Aussparung, welche in der gezeigten Ausführungsform auch als Drehlager für die Dämpfungseinheit 10 dient, um ein radiales Ausschwenken der Dämpfungseinheit 10 aus der Schutzhülle 2 von der eingefahrenen Position in die ausgefahrene Position zu ermöglichen. Des Weiteren ist an dem Einspannabschnitt 15 mindestens eine erste Aussparung 17 vorgesehen, in die eine Nase 24 einer Verriegelungseinheit 44 eingreifen kann, die die Dämpfungseinheit 10 im eingefahrenen Zustand an ihrer Position hält. Die Verriegelungseinheit 44 umfasst in dieser Ausführungsform einen Biegebalken 23 und ist zusammen mit einer Balkenlagerung 28, die in der Abdeckung 4 integriert werden kann und einem in der Figur nicht dargestellten Aktor Teil der Auslöseeinheit 20. Der Biegebalken 23 kann aus Kunststoff bestehen, aber auch aus jedem anderen geeigneten Material hergestellt werden. Der Biegebalken 23 ist so vorgespannt, dass er eine sichere Verriegelung der Dämpfungseinheit 10 in der Schutzhülle 2 sicherstellt. Der Biegebalken 23 ist an seinem einen Ende in der Balkenlagerung 28 gelagert und zeigt an seinem anderen Ende ein Kopfstück 45, das in der Art ausgebildet ist, dass es durch die Kraft des vorgespannten Biegebalkens 23 in der Aussparung 17 so einrasten kann, dass die Verriegelungseinheit 44 die Dämpfungseinheit 10 in der eingefahrenen Position verriegelt. In der gezeigten Ausführungsform sind mehrere äquidistante Aussparungen 17 mit identischer Form hintereinander vorhanden, die beim Wiedereinschieben der Dämpfungseinheiten 10 von der ausgefahrenen in die eingefahrene Position ein Einrasten ermöglichen bevor die Dämpfungseinheiten 10 vollständig eingefahren sind, was zu einer vereinfachten Handhabung beim Wiedereinfahren führt. Das Kopfstück 45 zeigt dazu die beiden Nasen 24, die den gleichen Abstand wie die Aussparungen 17 haben und im vollständig eingefahrenen Zustand jeweils in eine Aussparung 17 eingreifen und so eine sichere Verriegelung gewährleisten. Die Aussparungen 17 und die Nasen 24 sind dabei so geformt, dass jeweils eine Seite der Aussparungen 17 und die jeweils korrespondierende Seite der Nasen 24 senkrecht zur Tangente der runden Aussparung des Einspannabschnittes 15 verlaufen. Dadurch bilden die Nasen 24 und die Aussparungen 17 durch die beiden senkrechten Seiten einen festen Anschlag, gegen den die Dämpfungseinheit 10 in der eingefahrenen Position sicher gehalten werden kann. Die gegenüberliegende Seite der Aussparungen 17 und der Nasen 24 sind derart gestaltet, dass das Kopfstück 45 bei einer Bewegung der Dämpfungseinheit 10 von der ausgefahrenen in die eingefahrene Position auf einer Schräge aus den Aussparungen 17 gehoben wird. Nach einem Fallvorgang kann die Dämpfungseinheit 10 durch Aufbringen einer Kraft wieder in die Schutzhülle 2 hineingedrückt werden, bis die Nasen 24 in den Aussparungen 17 einrasten und die Dämpfungseinheit 10 dadurch verriegelt wird. Dieser Vorgang ist beliebig wiederholbar, sodass der Schutzmechanismus nach Zurückführen der Dämpfungseinheiten 10 in die Schutzhülle 2 immer wieder von neuem aktiviert werden kann. An der Seite des Biegebalkens 23, die von der Dämpfungseinheit 10 weg zeigt, ist das Kopfstück 45 mit dem Aktor verbunden. In der gezeigten Ausführungsform ist der Biegebalken 23 mit einem Hebel 25 verbunden, der die Aufgabe hat, die Kraft des Aktors um 90° umzulenken. Die dargestellten Pfeile in Figur 2a zeigen die Richtung, in die der Aktor mit und ohne Nutzung des Hebels 25 an dem Biegebalken 23 ziehen muss, um den Biegebalken 23 gegen die Kraft seiner Vorspannung von dem Einspannabschnitt 15 zurückzuziehen und so die Verriegelungseinheit 44 zu lösen.

Der Aktor kann wie durch die Pfeile angedeutet sowohl in Richtung der Vorspannung direkt an dem Biegebalken 23 angreifen, oder parallel zum Biegebalken 23 am Hebel 25, wobei die Kraft dabei durch den Hebel 25 um 90° umgelenkt wird. Ist die Verriegelungseinheit 44 gelöst, wird die Dämpfungseinheit 10 durch eine Drehfeder von der eingefahrenen in die ausgefahrene Position bewegt. Die Drehfeder ist dazu in der eingefahrenen Position mit einer Vorspannung montiert.

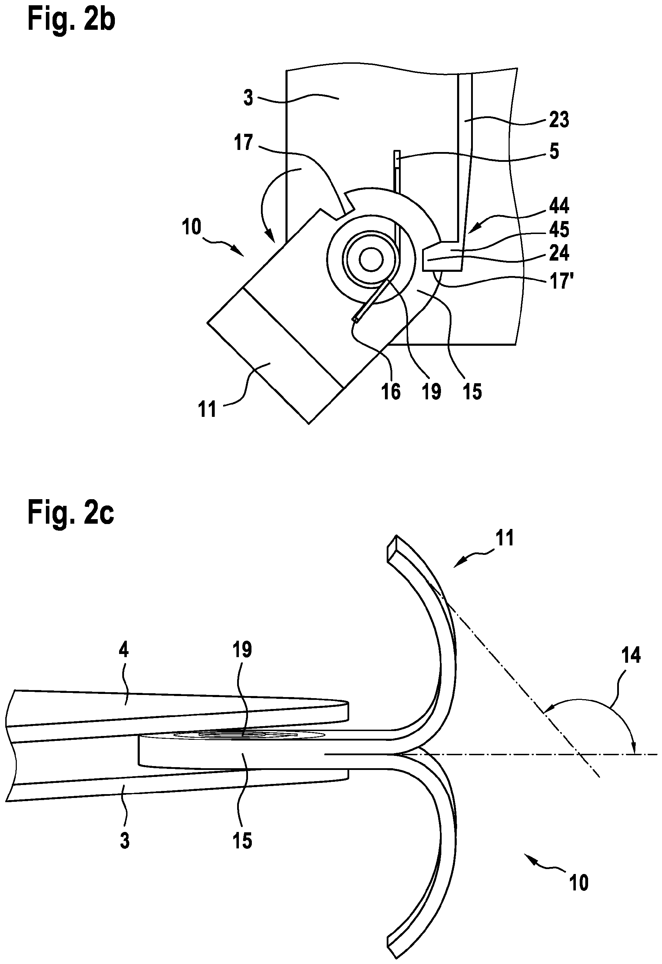

Figur 2b zeigt eine weitere Ausführungsform der Erfindung. Im Unterschied zu der in Figur 2a gezeigten Ausführungsform sind die Einspannabschnitte 15 und der Biegebalken 23 abweichend gestaltet. Der Einspannabschnitt 15 weist im in der Figur gezeigten Beispiel nur eine Aussparung 17 für die Fixierung der Dämpfungseinheiten 10 in der eingefahrenen Position auf, wobei die prinzipielle Gestaltung der Aussparung 17 mit einer senkrechten Seite und einer Schräge wie weiter oben beschrieben identisch ist. Darüber hinaus ist eine zweite Aussparung 17' in dem Einspannabschnitt 15 angeordnet, die eine Verriegelung im ausgefahrenen Zustand der Dämpfungseinheit 10 ermöglicht und gleichzeitig als Anschlag für die Dämpfungseinheit 10 dient. Die einzige Nase 24 des Biegebalkens 23 ist entsprechend passend zu den Aussparungen 17 und 17' gestaltet. Zusätzlich ist eine weitere Aussparung 16 in dem Einspannabschnitt 15 integriert, die zur Aufnahme eines Endstücks einer Drehfeder 19 ausgebildet ist, die auch bei dem in Figur 2a dargestellten ersten Ausführungsform identisch ausgeführt ist. Die Drehfeder 19 wird mit ihrem einen Ende auf dem Grundgestell 3 oder der Abdeckung 4 in einer Aufnahme 5 fixiert und mit dem anderen Ende in der Aussparung 16 in dem Einspannabschnitt 15. Die Drehfeder 19 hat die Aufgabe, die Dämpfungseinheit 10, nachdem der Mikrocontroller 40 einen Fallvorgang detektiert hat und die Verriegelungseinheit 44 durch die Auslöseeinheit 20 gelöst wurde, von der eingefahrenen Position in die ausgefahrene Position zu bringen. Die Drehfeder 19 ist so angeordnet, dass sie im eingefahrenen Zustand der Dämpfungseinheit 10 vorgespannt ist, also Formänderungsenergie gespeichert hat, die durch das Lösen der Verriegelungseinheit 44 freigesetzt wird und dazu genutzt wird, die Dämpfungseinheit 10 radial um das Drehlager 15 aus der Aussparung in der Schutzhülle 2 zu schwenken.

Der Einspannabschnitt 15 und der Dämpferkönnen wie in Figur 1 dargestellt einteilig, also aus dem gleichen Material, ausgeführt sein. Die Anforderungen an das Material für denjenigen Teil des Einspannabschnittes 15, in welchem die Aussparungen 17 bzw. 17' angeordnet sind und an das Material des Dämpfers unterscheiden sich in der Härte und Steifigkeit, so dass der Einspannabschnitt 15 vorteilhafterweise auch zweiteilig ausgeführt werden kann. Ein erster Teil ist der Dämpfer und eine Aufnahme für den Einspannabschnitt 15 oder einen Teil des Einspannabschnittes 15, der einteilig aus einem für die Dämpfungseigenschaften des Dämpfers vorteilhaften weicheren Material hergestellt wird. Ein zweiter Teil ist der Einspannabschnitt 15 oder ein Teil des Einspannabschnittes, in dem die Aussparungen 17 bzw. 17' angeordnet sind, der zur besseren Haltbarkeit und Stabilität aus einem steiferen und/oder härteren Material hergestellt wird und mit dem ersten Teil aus dem Dämpfermaterial verbunden wird. Die Verbindung der beiden Teile kann durch Formschluss, wie beispielsweise mit einer Nut und Feder oder auch durch einen Kraftschluss, wie zum Beispiel einem adhäsiven Verfahren, wie zum Beispiel Kleben oder Schweißen oder durch eine Kombination aus beidem geschlossen werden. Figur 2b zeigt die Dämpfungseinheit 10 in der ausgefahrenen Position. Das Kopfstück 45 des Biegebalkens 23 ist in der zweiten Aussparung 17' eingerastet und fixiert die Dämpfungseinheit 10 in der für den Schutz des Mobiltelefons 1 optimalen Position, also in einem Winkel zwischen einer Längsachse des Dämpfungselementes 11 zu den beiden Seitenkanten des Mobiltelefons 1 zwischen 110° und 160°, wobei ein Winkel um 135°, also die Winkelhalbierende des von den Seitenkanten eingeschlossenen Winkels, den optimalen Schutz bildet. Die Drehfeder 19 ist in dieser Stellung teilweise entspannt, wobei die verbleibende Kraft ausreichend ist, um die Dämpfungseinheit 10 auch beim Aufprall fest gegen den Anschlag in der Aussparung 17' zu drücken und so ein versehentliches Einklappen der Dämpfungseinheit 10 zu vermeiden, welches eine Reduzierung der Dämpfungswirkung der Dämpfungseinheit 10 zur Folge hätte.

Figur 2c zeigt die Dämpfungseinheit 10 aus Figur 2b in einer Seitenansicht in der ausgefahrenen Position. Während der Winkel zwischen der Längsachse des Dämpfungselementes 11 und den eine Ecke einschließenden Seitenkanten jeweils 135° betragen sollte, um die besten Dämpfungsergebnisse zu erzielen, ist das Dämpfungselement 11 selbst in der geöffneten Position spiralförmig gebogen. Unter einer spiralförmigen Biegung wird vorliegend eine bogenförmige Biegung des Dämpfungselementes 11 aus der Ebene des Einspannabschnittes 15 heraus verstanden.

Ausgehend von dem Einspannabschnitt 15 in Richtung des dem Einspannabschnittes 15 abgewandten Endes des Dämpfungselementes 11 kann dabei der Winkel, den das jeweils betrachtete Teilstück des Dämpfungselementes 11 mit der Ebene des Einspannabschnittes 15 einschließt, von 0° auf ca. 100°-180° ansteigen. Besonders bevorzugt ist ein Winkel von ca. 150° für das letzte Teilstück auf der dem Einspannabschnitt abgewandten Seite des Dämpfungselementes 11. Dieser Winkel wird im Folgenden als Öffnungswinkel 14 des Dämpfungselementes 11 bezeichnet.

Die Öffnungen der beiden spiralförmig gebogenen Dämpfungselemente 11 sind entgegengesetzt orientiert, wodurch das Ende des einen Dämpfungselementes 11 in Richtung der Vorderseite des Mobiltelefons 1 und das Ende des anderen Dämpfungselementes 11 in Richtung der Rückseite des Mobiltelefons 1 zeigt und dadurch das Mobiltelefon 1 unabhängig von seiner Orientierung im Raum bei einem Sturz auf eine flache Ebene vor Beschädigung bestmöglich geschützt ist.

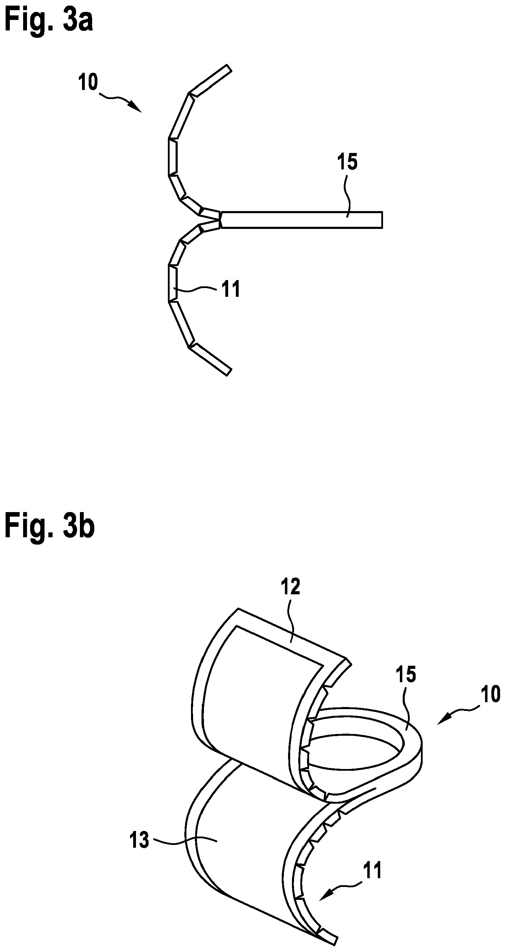

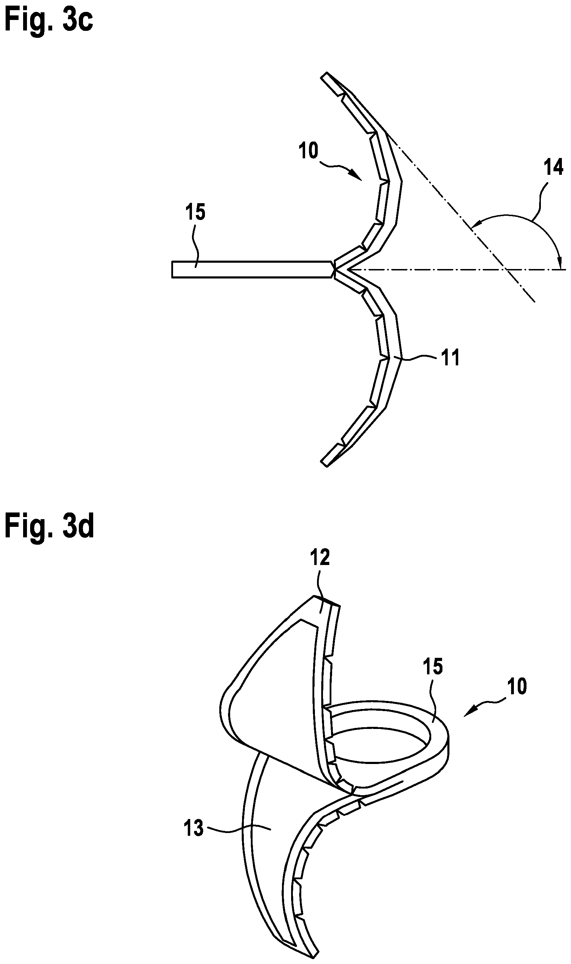

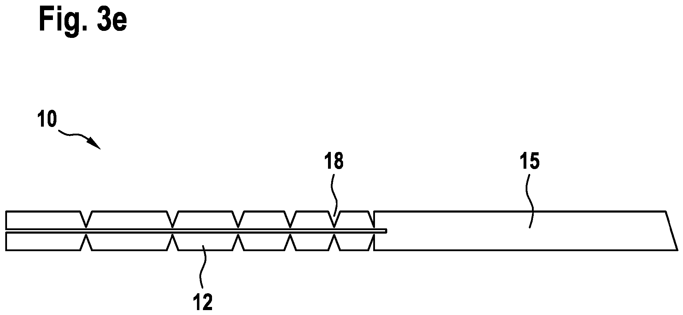

Figur 3a und 3 b zeigen eine erste Ausführungsform einer Dämpfungseinheit 10, die einen Einspannabschnitt 15 und zwei Dämpfungselemente 11 umfasst, die wiederum jeweils einen Dämpfer 12 und eine Feder 13 umfassen, wobei Figur 3a eine Seitenansicht der Dämpfungseinheit 10 und die Figur 3b eine perspektivische Ansicht zeigt. Die Feder 13 ist im ausgefahrenen Zustand nach außen gebogen. Der Dämpfer 12 ist derart ausgestaltet, dass er die Feder 13 aufnehmen kann und die Feder 13 zumindest teilweise umschließt. Die Feder 13 kann in den Dämpfer 12 wie in eine Tasche oder Hülle eingeschoben und/oder mit Hilfe von Biegelaschen mit der Tasche oder Hülle verbunden werden, wodurch die Feder 13 und der Dämpfer 12 durch Formschluss miteinander verbunden sind und der Dämpfer die gleichen Deformationen, wie Verbiegen, Stauchen, Knicken oder Biegen der Feder 13 ausführt. Die Feder 13 und der Dämpfer 12 können sich dennoch bei einer Deformation des Dämpfungselementes 11 gegeneinander bewegen, was die Dämpfung durch Reibung zwischen der Feder 13 und dem Dämpfer 12 zusätzlich erhöht. Das Dämpfungselement 11 wird im ausgefahrenen Zustand durch die in der Feder 13 gespeicherte Verformungsenergie aus der flachen Form der eingefahrenen Position in eine gebogene Form gebracht, die der Form der Feder 13 in der ausgefahrenen Position entspricht. Im Falle eines Sturzes, zum Beispiel aus 2m Höhe, nehmen die Feder 13 und der Dämpfer 12 die Energie des Sturzes auf, wobei die Energieaufnahme unabhängig vom Auftreffwinkel mindestens 1,5 Joule für ein Dämpfungselement 11 beträgt, damit der Sturz des Mobiltelefons 1 innerhalb des Federwegs des Dämpfungselementes 11 gestoppt werden kann. Die von der Feder 13 aufgenommene Energie wird durch die Feder 13 praktisch ohne Energieverlust wieder an die Schutzhülle 2 zurückgegeben, wobei die von Dämpfer 12 aufgenommene zum größten Teil in die Verformung des Volumens des Dämpfers 12 fließt und dort in Form von Wärme dissipiert wird. Je größer die durch den Dämpfer 12 aufgenommene Energie, je geringer ist die Wahrscheinlichkeit, dass das Mobiltelefon 1 nach einem ersten Aufprall durch die von der Feder 13 zurückgegebene Energie erneut von der Ebene abhebt und erneut auf derselben oder ein nicht ebenes Hindernis auftrifft, was wegen der erhöhten Gefahr einer Beschädigung des Mobiltelefons 1 zu vermeiden ist. Die Feder 13 hat also die Aufgabe, den Aufprall innerhalb des Federwegs möglichst langsam abzubremsen um die Belastung auf das Mobiltelefon 1 gering zu halten, wobei der Dämpfer 12 die Aufgabe hat, so viel kinetische Energie wie möglich über die Deformation des Volumens in Wärme umzuwandeln und so die im System befindliche ursprüngliche kinetische Energie möglichst vollständig zu dissipieren, bis das Mobiltelefon 1 am Boden liegen bleibt. Durch die Kombination der Feder 13 mit dem Dämpfer 12 in der weiter oben beschriebenen erfindungsgemäßen Art ist es möglich, mit einem sehr geringen Bauraum eine größtmögliche Schutz- und Dämpfungswirkung zu erreichen ohne dabei die Wiederverwendbarkeit auf der einen und die einfache Handhabung auf der anderen Seite einzuschränken. Durch die Anordnung der Dämpfer 12 an der Innenseite der spiralförmig gebogenen Feder 13 in der ausgefahrenen Position wird der Dämpfer 12 bei einer Deformation der Feder 13 gestaucht, was zu einer Verringerung und/oder Umformung des Volumens des Dämpfers führt, wobei kinetische Energie in Wärme umgewandelt wird. Für die Lebensdauer ist eine Stauchung des verwendeten Kunststoffes vorteilhafter als eine Dehnung, wie es bei einer umgekehrten Anordnung, also mit dem Dämpfer 12 an der Außenseite der spiralförmig gebogenen Feder 13 der Fall wäre. Zusätzlich ist das weichere Dämpfermaterial besser geeignet, das Einfalten der Dämpfungselemente 11 von der ausgefahrenen in die eingefahrene Position durch Reibung an der Abdeckung 4 beziehungsweise dem Grundgestell 3 zu unterstützen. Die beim Bewegen in die Schutzhülle 2 benötigte Kraft zum Einfalten der Dämpfungseinheit 10 darf nicht zu groß sein und ist in der gezeigten Ausführungsform beispielsweise kleiner 150N, so dass eine einfache Handhabung beim Einklappen der Dämpfungselemente 11 nach einem Sturz gewährleistet ist.

Insbesondere können die Dämpfer 12 eines Dämpfungselementes 11 unterschiedlich dick ausgebildet sein - der dem Display des Mobiltelefons zugewandte Dämpfer kann dicker ausgebildet sein als der der Rückseite zugewandte Dämpfer. Für den dickeren Dämpfer sind Dicken im Bereich von ca. 1,6mm vorteilhaft, für den dünneren ca. 1,2mm.

Die Feder 13 kann dabei vorteilhafterweise so ausgelegt sein, dass die Verformung von der ausgefahrenen Form in die deformierte eingefahrene Position im elastischen Bereich liegt. Weiterhin sollte die Feder 13 eine hohe Wechselbiegefestigkeit aufweisen, um die wiederverwendbare Dämpfungseinheit 10 immer wieder von der eingefahrenen in die ausgefahrene Position und zurück fahren zu können, ohne dass eine Beschädigung der Feder 13 zu befürchten wäre. Kritisch ist hier vor allem der Bereich an dem Einspannabschnitt 15, da hier die größten Biegespannungen im Fall eines Sturzes auftreten. Weiterhin beeinflussen die Länge und Breite der Feder 13 die Spannungen, Steifigkeit und den Federweg der Feder 13. Diese genannten Anforderungen werden durch die in erfindungsgemäße Kombination von einer Feder aus Federstahl und einem Dämpfer aus thermoplastischem Polyurethan, das im Folgenden als TPU bezeichnet wird, in vorteilhafter Weise erreicht. Auch die Verwendung von PA (PA6, PA66, PA12), PET und PBT ist hier von Vorteil.

Die in der Figur 3a und 3b dargestellte Form des Dämpfungselementes ist rechteckig und stellt eine erste mögliche Form dar. Figur 3c und 3d zeigen ebenfalls eine Seiten- und eine perspektivische Ansicht einer Form, wobei jedoch das Dämpfungselement 11 zum freien Ende hin spitz zuläuft. Versuche haben gezeigt, dass die aufgenommene Energie und der Federweg bei deutlich geringerem Bauraumbedarf nur minimal sinken. Durch die spitz zulaufende Form können zwei Dämpfungselemente 11 vorteilhafterweise zumindest teilweise nebeneinander angeordnet sein und sich so miteinander verschränken.

Figur 3e zeigt die Dämpfungseinheit 10 aus Figur 3a und 3b im eingefahrenen Zustand in einer Seitenansicht. Die innen liegenden Federbleche sind durch den die Federn 13 umschließenden Kunststoff verdeckt. Der Dämpfer 12 weist auf der Außenseite, also der Seite, die in eingefalteter Position außen ist, Einkerbungen 18 auf, die in verschiedenen Abständen angeordnet sind, wobei die Abstände von dem Einspannabschnitt 15 ausgehend immer größer werden. Die Einkerbungen 18 wirken wie Gelenke 18, welche die für die Biegung des Dämpfers vom ausgefahrenen in den eingefahrenen Zustand erforderliche Kraft reduzieren und ein Fließen des Kunststoffs bei längerer Lagerung in der eingefahrenen Position verhindern. Ein derartiges Fließen würde dazu führen, dass das Dämpfungselement 11 nach dem Auslösen in der ausgefahrenen Position nicht mehr den vollen Öffnungswinkel 14 erreicht. Die Feder 13, die immer innerhalb ihres elastischen Bereiches deformiert wird, zeigt keine derartigen Kriecheffekte und kann daher konventionell ausgeführt werden. Die zu dem dem Einspannabschnitt 15 gegenüberliegenden Ende des Dämpfers 12 hin wachsenden Abstände der Gelenke 18 wirken sich im Wesentlichen auf die Form des ausgefahrenen Dämpfungselementes 11 aus. Im gezeigten Beispiel resultiert der wachsende Abstand der Gelenke 18 in einer spiralförmigen Biegung des ausgefahrenen Dämpfungselementes 11. Ein beispielsweise äquidistanter Abstand der Gelenke 18 würde zu einer Kreisbogenform des ausgefahrenen Dämpfungselementes 11 führen.

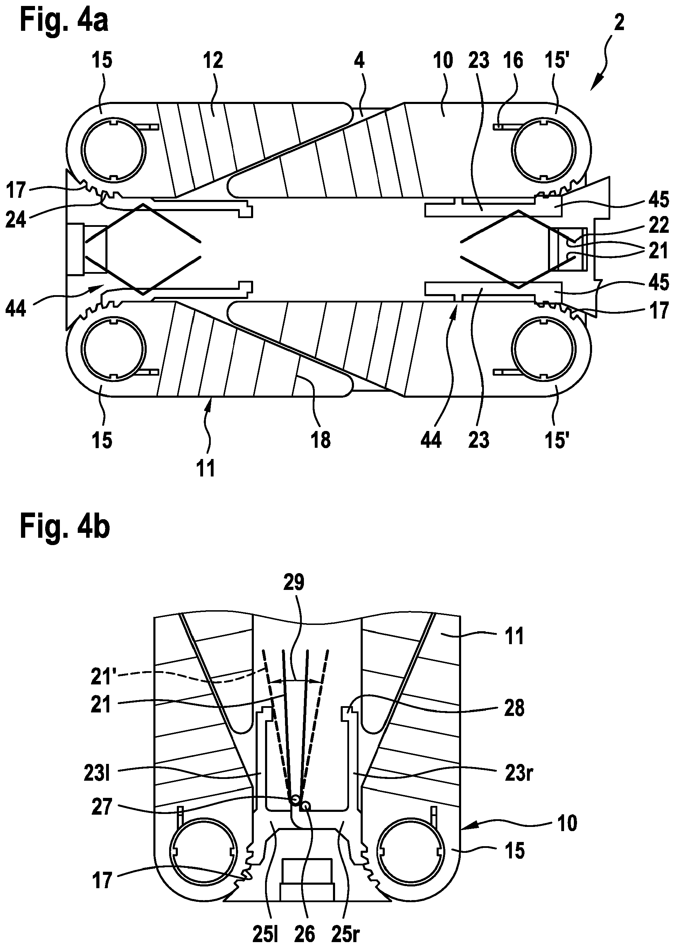

Figur 4a zeigt eine zweite Ausführungsform zu der Erfindung, bei welcher die Dämpfungseinheiten 10 derart ausgebildet sind, dass die Dämpfungselemente 11 sich in Richtung ihres distalen Endes, also des dem Einspannabschnitt 15 abgewandten Endes, verjüngen. Die verjüngten Dämpfungselemente 11 sind mit einem Winkel größer 0° gegenüber der Längsachse des Mobiltelefons 1 verdreht angeordnet, so dass eine Seite des Dämpfungselementes 11 zu einer Seitenkante der Schutzhülle 2 parallel verläuft und in einem bevorzugten Ausführungsbeispiel mit der Schutzhülle 2 bündig abschließt. Die Einkerbungen 18 in den Dämpfern 12 verlaufen senkrecht zu der Symmetrieachse des Dämpfungselementes 11, entlang derer sich die Feder 13 in der ausgefahrenen Position spiralförmig aufrollt. Die Symmetrieachse der Dämpfungselemente 11 liegt in der ausgefahrenen Position auf der Winkelhalbierenden des Winkels zwischen den eine Ecke einschließenden Seitenrändern des Mobiltelefons 1, um die bestmögliche Schutz- und Dämpfungswirkung zu erzielen. Diese Position des Dämpfers 12 ist auf Grund von Bauraumanforderungen nicht immer mit identischen Dämpfungseinheiten 10 für alle vier Ecken umzusetzen. Die Dämpfungseinheiten 10 auf der rechten Seite der dargestellten Schutzhülle 2 besitzen einen verlängerten Einspannabschnitt 15', um zum Beispiel eine Kamera, die in manchen Modellen in einer der oberen Ecken positioniert ist, nicht zu überdecken (siehe Figur 1). Dies führt dazu, dass die Dämpfungseinheiten 10 unterschiedlich lang sein können. Der Winkel, den die Dämpfungseinheiten 10 zwischen der eingefahrenen und der ausgefahrene Position überstreichen, kann daher für die verschiedenen Dämpfungseinheiten zwischen 90° und 180° variieren. Vorteilhafte Werte liegen für die in Figur 1 oben dargestellten Dämpfungseinheiten (mit verlängertem Einspannabschnitt) im Bereich von 150°-170°, insbesondere im Bereich zwischen 157° und 161°, und für die in der genannten Figur unten dargestellten Dämpfungseinheiten im Bereich zwischen 120° und 140°, insbesondere im Bereich zwischen 127° und 131°.

Alle vier Dämpfungseinheiten 10 sind über einen Biegebalken 23 direkt mit einem Aktor 21 verbunden, der im gezeigten Ausführungsbeispiel als Draht aus einer Formgedächtnislegierung, im Folgenden als SMA-Draht 21 bezeichnet, ausgeführt ist, wobei auch Piezo- oder elektromagnetische oder jede andere Art von geeigneten Aktoren verwendet werden kann. SMA-Drähte (shape memory alloy), die auch als Formgedächtnislegierung oder Memorymetall bezeichnet werden, sind spezielle Metalle, die in zwei unterschiedlichen Kristallstrukturen existieren können. Der Begriff Formgedächtnis steht für die ungewöhnliche Eigenschaft der Gestalterinnerung. Nach einer starken Deformation ist die Formgedächtnislegierung in der Lage, sich in eine zuvor eingeprägte Gestalt zurück zu verformen. Die meisten Metalle haben bis zu ihrem Schmelzpunkt immer dieselbe Kristallstruktur, im Gegensatz zu einer SMA-Legierung. Diese Legierung ändert ihre Struktur in Abhängigkeit der Temperatur. Es gibt eine Hochtemperaturphase (Austenit) und eine Niedertemperaturphase (Martensit). Diese beiden Phasen können durch Temperaturänderung ineinander übergehen. Innerhalb bestimmter Belastungsgrenzen erfolgt die damit verbundene Gestaltänderung vollkommen reversibel. Dieser Effekt ist besonders ausgeprägt bei metallischen Legierungen wie z.B. NickelTitan (NiTi, Nitinol).

Im dargestellten Ausführungsbeispiel wird der sogenannte Einwegeffekt genutzt. Dieser beruht auf der pseudoplastischen Verformung im martensitischen Zustand. Durch das Anlegen einer mechanischen Spannung lässt sich das Kristallgitter im martensitischen Zustand leicht umorientieren und es entsteht eine Formänderung, welche im kalten Zustand bleibend ist. Wird die Temperatur jedoch erhöht, so stellt sich während der Temperaturerhöhung die ursprüngliche Kristallorientierung des Austenits wieder ein. Somit wird die ursprüngliche Form des Formgedächtniselementes wiederhergestellt. Wird das Material erneut abgekühlt, erfolgt keine weitere Formänderung. An den Aktorlagerungen 22 kann eine Spannung an den SMA-Draht 21 angelegt werden, wodurch Strom durch den SMA-Draht 21 fließt, welcher sich dadurch erhitzt, und so der weiter oben beschriebene Effekt eintritt. In der ursprünglichen Form ist der SMA-Draht 21 so geformt, dass er den Biegebalken 23 so weit bewegen kann, dass die Dämpfungseinheit 10 komplett entriegelt wird. Der Biegebalken 23 ist wiederum so ausgelegt, dass er genügend Kraft aufbringen kann, um den SMA-Draht 21 durch mechanische Kraft im pseudoplastischen Bereich zu verformen, wobei dieser gedehnt wird. Die Dehnung ist dabei so groß, dass das Kopfstück 45 durch die seitens des Biegebalkens 23 ausgeübte Kraft in die Aussparung 17 gedrückt wird und die Dämpfungseinheiten 10 im eingefahrenen Zustand verriegelt werden. Der in der Ausführungsform der Figur 4a dargestellte Biegebalken 23 ist also so ausgelegt, dass er sowohl die Kraft zur pseudoplastischen Verformung des SMA-Drahtes 21 als auch die Kraft zum Anpressen des Kopfstücks 45 des Biegebalkens 23 gegen die Aussparung 17 und in die Verriegelungseinheit 44 aufbringt und andererseits nur so viel Kraft erzeugt, dass der SMA-Draht 21 durch Erwärmung auf die Temperatur der Hochtemperaturphase wieder in die ursprüngliche Form zurückkehren kann. Der SMA-Draht 21 ist an seinen Enden zwischen zwei Aktorlagerungen 22 fixiert und in seiner ursprünglichen Form im gezeigten Beispiel mit einem Knickwinkel von ca. 130° mittig geknickt, so dass er zusammen mit der Verbindungslinie zwischen den beiden Aktorlagerungen 22 ein gleichschenkeliges Dreieck aufspannt. In der gezeigten Ausführungsform wird die Verriegelungseinheit 44 durch jeweils einen Aktor 21 gelöst, wenn der Mikrocontroller 40 einen Fallvorgang detektiert und die Auslöseeinheit 20 Spannung an den SMA-Draht 21 anlegt.

Figur 4b zeigt eine weitere Ausführungsform der Auslöseeinheit, wobei zwei Biegebalken 23r und 23l durch nur einen wiederum als SMA-Draht 21 ausgebildeten Aktor ausgelöst werden. Der Hebel 25l, der in der Figur 4b mit dem linken Biegebalken 23l verbunden ist, ist an seinem Ende mit einem Mitnehmer 26 versehen. Der Hebel 25r, der mit dem rechten Biegebalken 23r verbunden ist, reicht soweit über den Hebel 25l, dass er bei Betätigung durch den mit ihm am Befestigungspunkt 27 verbundenen Aktor 21 den Hebel 25l über den Mitnehmer 26 mit bewegt und so beide Dämpfungselemente 11 ausgelöst werden. In der Figur 4b ist neben dem SMA-Draht 21 ein weiterer gestrichelt dargestellter SMA-Draht 21' dargestellt, dessen Knickwinkel von dem des Drahtes 21 abweicht. Der Knickwinkel 29 hat einen Einfluss auf die von dem SMA-Draht 21 bzw. 21' ausgeübte Kraft und auf den zurückgelegten Weg zwischen der ursprünglichen und der mechanisch verformten Form des Drahtes 21 bzw. 21' und liegt im gezeigten Beispiel im Bereich von 10° bzw. 20°. Ein weiteres Kriterium bei der Auslegung des Knicks, also des Knickwinkels 29 ist die Reaktionsgeschwindigkeit des SMA-Drahtes 21, wobei dieser eine untergeordnete Rolle spielt.

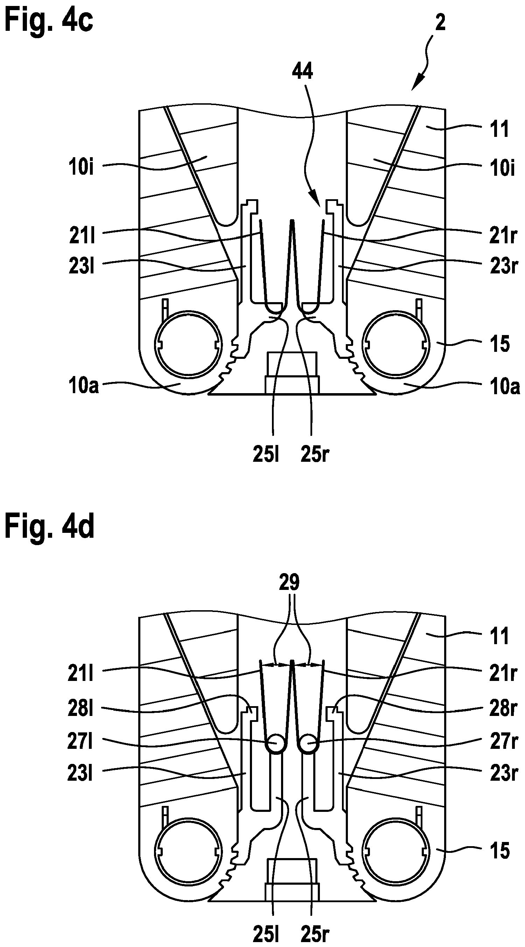

Eine weitere Ausführungsform der Verriegelungseinheit 44 und der Angriffspunkte des Aktors ist in Figur 4c dargestellt. Die Hebel 25r und 25l sind nahezu senkrecht zu den Biegebalken 23r und 23l angeordnet und die Aktoren 21r und 21l sind im Bereich der Biegebalken 23r bzw. 23l angeordnet, was eine sehr kompakte Bauweise ermöglicht, wie sie bei kleineren Mobiltelefonen 1 oder anderen elektronischen Geräten notwendig sein kann. Durch die überlappende Anordnung der Dämpfungselemente 11 ist es möglich, die inneren Dämpfungseinheiten 10i, die in eingefahrenem Zustand näher an der Längssymmetrieachse der Schutzhülle 2 liegen, durch die äußeren Dämpfungseinheiten 10a mit im eingefahrenen Zustand zu halten. Dadurch ist es möglich, auf die Verriegelungseinheiten 44 der beiden inneren Dämpfungseinheiten 10i zu verzichten, was neben dem erforderlichen Bauraum auch die Kosten reduziert.

Eine weitere Ausführungsform der Hebel 25 und der Befestigungspunkte 27r und 27l des Aktors ist in Figur 4d dargestellt. Die Hebel 25r und 25l mit den Befestigungspunkten 27r und 27l für die Aktoren 21r und 21l sind gegenüber den Hebeln in Figur 4c in Richtung der Längsachsen der Biegebalken 23r und 23l verlängert, wodurch die Aktoren 21r und 21l in einem Bereich angeordnet werden können, der zwischen den Balkenlagerungen 28r und 28l der Biegebalken 23r und 23l liegt und so mehr Bauraum für die Aktoranbindung zur Verfügung steht und darüber hinaus die Knickwinkel 29 größer gewählt werden können.

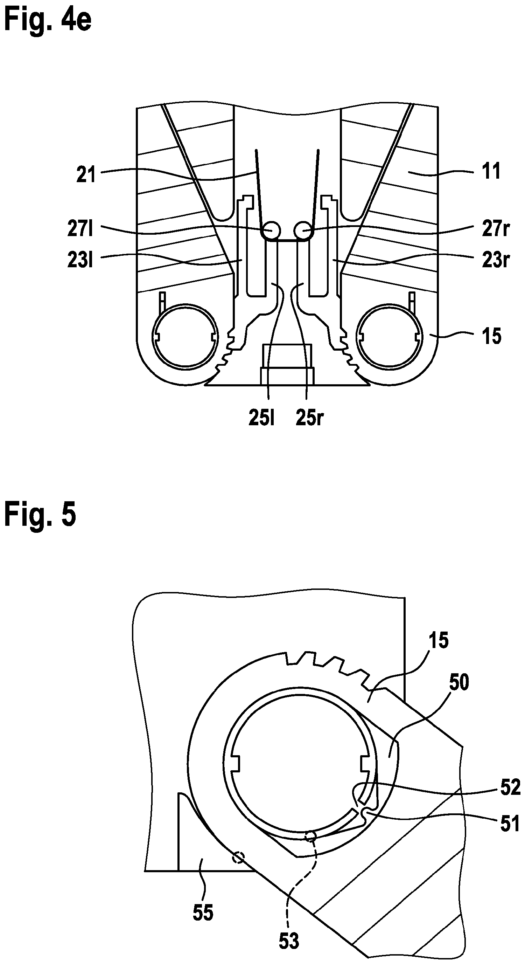

In einer weiteren Ausführungsform, wie sie in Figur 4e dargestellt ist, werden die beiden Hebel 25r und 25l anstatt mit zwei Aktoren 21r und 21l nur mit einem Aktor 21, der an den Befestigungspunkten 27r und 27l für den Aktor 21 der beiden Hebeln 25r und 25l angreift, aktuiert, um die Dämpfungseinheiten 10 auszulösen.

Figur 5 zeigt eine Ausführungsform der Erfindung mit weiter verbesserten Dämpfungseigenschaften, welche insbesondere für zwei Einwirkungsrichtungen der Kraft auf die Dämpfungseinheit im Falle eines Auftreffens auf den Boden ausgelegt sind. In der ersten Variante wirkt die Kraft parallel zur Längsachse des Mobiltelefons auf die Dämpfungseinheit ein, in der zweiten Variante senkrecht dazu.

Die erste Variante wird durch den Zusatzdämpfer 50 adressiert, der im gezeigten Beispiel als TPU-Element ausgeführt ist, welches in den Einspannabschnitt 15 eingesetzt und mit einem Zapfen 51 versehen ist. Für den Fall einer in paralleler Richtung wirkenden Kraft schiebt sich der Zapfen 51 in die korrespondierende Aussparung 52, wodurch ein Verdrehen der Dämpfungseinheit verhindert wird. Der Zapfen 51 muss dabei nicht zwingend an der gezeigten Stelle angeordnet sein, sondern je nach Anwendungsfall angepasst werden. Weiterhin können auch mehrere Zapfen realisiert werden. Die ideale Position des Zapfens ist in der Figur mit der Bezugsziffer 53 bezeichnet.

Der weitere Zusatzdämpfer 55 adressiert den Fall senkrechter Krafteinwirkung und bildet einen weichen Anschlag für die Dämpfungseinheit. Der Einspannabschnitt 15 wird geschont, da sich die Kraft hier besser verteilen kann, wodurch die Gefahr des Einreißens des Einspannabschnittes 15 verringert wird.

Je nach Bauraumanforderungen und Randbedingungen kann die Schutzhülle mit verschiedenen Varianten und einer verschiedenen Anzahl von Aktoren ausgestattet werden, wodurch diese sehr flexibel angepasst werden kann.

### Bezugszeichenliste

- 1: elektronisches Gerät, Mobiltelefon
- 2: Schutzhülle, Umhausung
- 3: Grundgestell
- 4: Abdeckung
- 5: Aufnahme Drehfeder
- 6: Aufnahme Einspannabschnitt
- 10: Dämpfungseinheit
- 11: Dämpfungselement
- 12: Dämpfer
- 13: Feder
- 14: Öffnungswinkel Dämpfungseinheit
- 15: Einspannabschnitt
- 16: Aussparung Drehfeder
- 17: Aussparung für Verriegelung
- 18: Einkerbung, Gelenk Dämpfer
- 19: Feder, Drehfeder
- 20: Auslöseeinheit
- 21: Aktor, SMA-Draht
- 22: Aktorlagerung
- 23, 23r, 23l: Biegebalken
- 24: Nase
- 25, 25r, 25l: Hebel
- 26: Mitnehmer
- 27: Befestigung SMA-Draht
- 28: Balkenlagerung
- 29: Knickwinkel SMA-Draht, Knick
- 30: Abflachung SMA-Draht, Knick
- 40: Mikrocontroller
- 41: Berührungssensor
- 42: Beschleunigungssensor
- 43: Energiespeicher
- 44: Verriegelungseinheit
- 45: Kopfstück
- 47: Kamera

## Patentansprüche

1. Umhausung (2) für ein elektronisches Gerät (1), umfassend,
- mindestens eine Dämpfungseinheit (10) mit mindestens einem Dämpfungselement (11), die zwischen einer eingefahrenen und einer ausgefahrenen Position bewegt werden kann, wobei das Dämpfungselement (11) eine Feder (13) und einen Dämpfer (12) umfasst
- mindestens einen Sensor (42) zur Detektion eines Fallvorgangs des elektronischen Gerätes (1),
- eine Auslöseeinheit (20), mittels derer die Dämpfungseinheit (10) von der eingefahrenen in die ausgefahrene Position bewegbar ist,
- wobei die Feder (13) und der Dämpfer (12) bei der Bewegung von der eingefahrenen Position in die ausgefahrene Position eine Formänderung erfahren,
**dadurch gekennzeichnet, dass**
- die Auslöseeinheit (20) einen Aktor (21) mit einem Draht (21, 21') aus einer Formgedächtnislegierung enthält,
- wobei der Draht (21, 21') an zwei Aktorlagerungen (22, 28) fixiert ist und einen Knick mit einem Knickwinkel (29) zwischen 0° und 180° aufweist, welcher die Auslenkung und die Kraft des Aktors (21) beeinflusst.

2. Umhausung (2) nach Anspruch 1,
**dadurch gekennzeichnet, dass**
jede Dämpfungseinheit (10) zwei Dämpfungselemente (11) umfasst.

3. Umhausung (2) nach einem der vorangehenden Ansprüche,
**dadurch gekennzeichnet, dass**
das Dämpfungselement (11) eine Feder (13) und einen Dämpfer (12) in zwei sich mindestens teilweise überlappenden Lagen umfasst.

4. Umhausung (2) nach einem der vorangehenden Ansprüche,
**dadurch gekennzeichnet, dass**
die Feder (13) und der Dämpfer (12) unter Reibung relativ zu einander bewegbar sind.

5. Umhausung (2) nach einem der vorangehenden Ansprüche,
**dadurch gekennzeichnet, dass**
die Feder (13) als Blattfeder ausgebildet ist.

6. Umhausung (2) nach einem der vorangehenden Ansprüche,
**dadurch gekennzeichnet, dass**
der Dämpfer (12) einen Kunststoff, insbesondere ein thermoplastisches Polyurethan enthält.

7. Umhausung (2) nach einem der vorangehenden Ansprüche,
**dadurch gekennzeichnet, dass**
der Dämpfer (12) mindestens eine Einkerbung (18) senkrecht zu seiner Längsachse aufweist.

8. Umhausung (2) nach einem der vorangehenden Ansprüche,
**dadurch gekennzeichnet, dass**
die Dämpfung durch Dissipation der Energie, die zur Umformung des Volumens des Dämpfers (12) benötigt wird, in Wärme erreicht wird.

9. Umhausung (2) nach einem der vorangehenden Ansprüche,
**dadurch gekennzeichnet, dass**
das Dämpfungselement (11) eine Energie von mindestens 1,5 Joule aufnehmen kann.

10. Umhausung (2) nach einem der vorangehenden Ansprüche,
**dadurch gekennzeichnet, dass**
sich mindestens ein Dämpfungselement (11) zu seinem freien Ende hin verjüngt und/oder die Längsachsen des Dämpfungselementes (11) und der Schutzhülle (2) in der eingefahrenen Position um einen Winkel größer 0° gegeneinander verdreht sind.

11. Umhausung (2) nach einem der vorangehenden Ansprüche,
**dadurch gekennzeichnet, dass**
mindestens ein Dämpfungselement (11) in der ausgefahrenen Position spiralförmig gebogen ist.

12. Umhausung (2) nach Anspruch 11,
**dadurch gekennzeichnet, dass**
der Öffnungswinkel (14) des spiralförmig gebogenen Dämpfungselementes (11) zwischen 120° - 180°, insbesondere bei 150° liegt.

## Claims

1. Housing (2) for an electronic device (1), comprising,
- at least one damping unit (10) with at least one damping element (11) which can be moved between a retracted position and an extended position, the damping element (11) comprising a spring (13) and a damper (12) (13) and a damper (12)
- at least one sensor (42) for detecting a falling process of the electrical device (1),
- a release unit (20) by means of which the damping unit (10) can be moved from the retracted position into the extended position,
- wherein the spring (13) and the damper (12) undergo a change in shape during the movement from the retracted position to the extended position,
**characterised in that**
- the release unit (20) contains an actuator (21) with a wire (21, 21') made of a shape memory alloy,
- wherein the wire (21, 21') is fixed to two actuator bearings (22, 28) and has a bend with a bend angle (29) between 0° and 180°, which influences the deflection and the force of the actuator (21).

2. Housing (2) according to claim 1,
**characterised in that**
each damping unit (10) comprises two damping elements (11).

3. Housing (2) according to one of the preceding claims,
**characterised in that**
the damping element (11) comprises a spring (13) and a damper (12) in two at least partially overlapping layers.

4. Housing (2) according to one of the preceding claims,
**characterised in that**
the spring (13) and the damper (12) can be moved relative to one another under friction.

5. Housing (2) according to one of the preceding claims,
**characterised in that**
the spring (13) is designed as a leaf spring.

6. Housing (2) according to one of the preceding claims,
**characterised in that**
the damper (12) contains a plastic, in particular a thermoplastic polyurethane.

7. Housing (2) according to one of the preceding claims,
**characterised in that**
the damper (12) has at least one notch (18) perpendicular to its longitudinal axis.

8. Housing (2) according to one of the preceding claims,
**characterised in that**
the damping is achieved by dissipating the energy required to change the shape of the damper (12) into heat.

9. Housing (2) according to one of the preceding claims,
**characterised in that**
the damping element (11) can absorb an energy of at least 1.5 joules.

10. Housing (2) according to one of the preceding claims,
**characterised in that**
at least one damping element (11) is tapered towards its free end and/or the longitudinal axes of the damping element (11) and the protective cover (2) are rotated by an angle greater than 0° relative to each other in the retracted position.

11. Housing (2) according to one of the preceding claims,
**characterised in that**
at least one damping element (11) is bent in a spiral in the extended position.

12. Housing (2) according to claim 11,
**characterised in that**
the opening angle (14) of the spirally bent damping element (11) is between 120° - 180°, in particular 150°.

## Revendications

1. Boîtier (2) destiné à un appareil électronique (1), ledit boîtier comprenant,
- au moins une unité d'amortissement (10) qui est pourvue d'au moins un élément d'amortissement (11) et qui peut être déplacée entre une position rétractée et une position déployée, l'élément d'amortissement (11) comprenant un ressort (13) et un amortisseur (12),
- au moins un capteur (42) destiné à détecter un processus de chute de l'appareil électronique (1),
- une unité de déclenchement (20) permettant de déplacer l'unité d'amortissement (10) de la position rétractée à la position déployée,
- le ressort (13) et l'amortisseur (12) subissant un changement de forme lors du passage de la position rétractée à la position déployée,
**caractérisé en ce que**
- l'unité de déclenchement (20) contient un actionneur (21) pourvu d'un fil (21, 21') en alliage à mémoire de forme,
- le fil (21, 21') étant fixé à deux paliers d'actionneur (22, 28) et présentant une courbure ayant un angle de courbure (29) compris entre 0° et 180° qui influe sur la déviation et la force de l'actionneur (21) .

2. Boîtier (2) selon la revendication 1,
**caractérisé en ce que**
chaque unité d'amortissement (10) comprend deux éléments d'amortissement (11).

3. Boîtier (2) selon l'une des revendications précédentes,
**caractérisé en ce que**
l'élément d'amortissement (11) comprend un ressort (13) et un amortisseur (12) en deux couches se chevauchant au moins partiellement.

4. Boîtier (2) selon l'une des revendications précédentes,
**caractérisé en ce que**
le ressort (13) et l'amortisseur (12) peuvent être déplacés l'un par rapport à l'autre par friction.

5. Boîtier (2) selon l'une des revendications précédentes,
**caractérisé en ce que**
le ressort (13) est réalisé sous la forme d'un ressort à lames.

6. Boîtier (2) selon l'une des revendications précédentes,
**caractérisé en ce que**
l'amortisseur (12) contient une matière plastique, en particulier un polyuréthane thermoplastique.

7. Boîtier (2) selon l'une des revendications précédentes,
**caractérisé en ce que**
l'amortisseur (12) comporte au moins une encoche (18) perpendiculaire à son axe longitudinal.

8. Boîtier (2) selon l'une des revendications précédentes,
**caractérisé en ce que**
l'amortissement est obtenu par dissipation de l'énergie, nécessaire pour transformer le volume de l'amortisseur (12), sous forme de chaleur.

9. Boîtier (2) selon l'une des revendications précédentes,
**caractérisé en ce que**
l'élément d'amortissement (11) peut absorber une énergie d'au moins 1,5 joules.

10. Boîtier (2) selon l'une des revendications précédentes,
**caractérisé en ce que**
au moins un élément d'amortissement (11) se rétrécit vers son extrémité libre et/ou les axes longitudinaux de l'élément d'amortissement (11) et du capot de protection (2) tournent l'un par rapport à l'autre d'un angle supérieur à 0° dans la position rétractée.

11. Boîtier (2) selon l'une des revendications précédentes,
**caractérisé en ce que**
au moins un élément d'amortissement (11) est courbé en spirale dans la position déployée.

12. Boîtier (2) selon la revendication 11,
**caractérisé en ce que**
l'angle d'ouverture (14) de l'élément d'amortissement (11) courbé en spirale est compris entre 120° et 180°, en particulier 150°.
